(19) Europäisches Patentamt
European Patent Office
Office européen des brevets

(11) Publication number: **0 228 820 B1**

(12) **EUROPEAN PATENT SPECIFICATION**

(45) Date of publication of patent specification: **11.03.92**

(51) Int. Cl.5: **H04N 7/137**

(21) Application number: **86309330.8**

(22) Date of filing: **28.11.86**

(54) **Method and apparatus of transmitting and decoding video data.**

(30) Priority: **30.11.85 JP 270554/85**

(43) Date of publication of application:
**15.07.87 Bulletin 87/29**

(45) Publication of the grant of the patent:
**11.03.92 Bulletin 92/11**

(84) Designated Contracting States:
**AT DE FR GB NL**

(56) References cited:
**GB-A- 2 144 301**
**US-A- 4 383 272**
**US-A- 4 589 110**

(73) Proprietor: **SONY CORPORATION**
**7-35 Kitashinagawa 6-Chome Shinagawa-ku**
**Tokyo 141(JP)**

(72) Inventor: **Kondo, Tetsujiro**
**C/o Sony Corporation 7-35 Kitashinagawa**
**6-chome**
**Shinagawa-ku Tokyo(JP)**

(74) Representative: **Ayers, Martyn Lewis Stanley et al**
**J.A. KEMP & CO. 14 South Square Gray's Inn**
**London, WC1R 5EU(GB)**

**EP 0 228 820 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of, and apparatus for transmitting video data to an apparatus for decoding video data.

Where image data containing a large quantity of information, such as a television signal, is transmitted, one data compression method is known wherein certain predetermined frame data of the television signal is skipped. At the receiver end, the frame data which is not transmitted is interpolated by utilising the actually transmitted frame data. A variety of data interpolation methods have been widely utilised. For instance, the pixel data of the frame which is not transmitted may be substituted by the corresponding pixel data of the preceding frame, and furthermore, such pixel data may be substituted by the averaged value of the corresponding pixel data of the preceding and succeeding frames.

The particular drawback, however, exists in that serious deterioration appears in the reproduced images of moving portions, causing image blurs. Although there is another interpolation method of obtaining movement vectors to transmit them, conspicuous image deterioration is present around the edge portions of the moving object.

It is therefore an aim of the invention to provide a method of and apparatus for transmitting image data in which the quantity of data can be compressed, and a data transmission apparatus thereof.

Another aim of the invention is to provide a method of and apparatus for reproducing either a frame or a field of image data which is not transmitted, at the receiver end with better data conditions, and a data transmission apparatus thereof.

Still another aim of the invention is to provide a method of, and apparatus for, reproducing images at the receiver end, which can represent various kinds of movement by a plurality of moving objects, and moreover, have no blur at the end portions thereof and no problem with uncovered background areas.

A further aim of the invention is to provide a method of transmitting data without block distortions and a data transmission apparatus thereof.

According to a first aspect of the invention, there is provided an apparatus for interframe coding of video signals employing frame skipping, the apparatus comprising:

input means for receiving video data of sequential fields;

memory means for storing the video data of a plurality of fields;

first transmitting means for periodically transmitting video data every predetermined number of fields; characterised by:

means for extracting reference pixel data in the region of a given pixel position from said fields to be transmitted;

parameter generating means for deriving coefficients of a linear combination which specifies a time spatial relation between a prediction value in a field to be skipped and the values of said reference pixel data in said fields to be transmitted, said parameter generating means comprising an arithmetic operation circuit which minimises the sum of the squares of the prediction errors between said prediction values and the actual value of the respective pixels;

second transmitting means for transmitting said parameters instead of the video data of said fields to be skipped.

This aspect of the invention also provides a method of interframe coding of video signals employing frame skipping comprising the steps of:

receiving video data of sequential fields;

storing the video data of a plurality of fields;

periodically transmitting video data every predetermined number of fields; characterised by the steps of:

extracting reference pixel data in the region of a given pixel position from a predetermined number of fields which are to be transmitted;

deriving coefficients of a linear combination which specify a time spatial relation between a prediction value in a field to be skipped and the values of said reference pixel data in said fields to be transmitted by minimising the sum of the squares of the prediction errors between said prediction values and the actual value of the respective pixels; and

transmitting said coefficients instead of the video data of said fields to be skipped.

A second aspect of the invention provides an apparatus for decoding an encoded video signal characterised by comprising:

input means for receiving video data of fields periodically transmitted every predetermined number of fields and coefficients of a linear combination, which specifies a time spatial relation between a prediction value in a skipped field and reference pixel data of the transmitted fields and in which the sum of the squares of the prediction errors between said prediction values and the actual value of the respective pixels has been minimised, between said fields being periodically transmitted;

memory means for storing the received video data of said fields being periodically transmitted;

prediction means for predicting pixel data of said skipped fields from the received video data of said fields being periodically transmitted and said coefficients.

For a better understanding of these and other aims of the present invention, reference is made to the following detailed description of the invention to be read in conjunction with the following drawings, in which:

Figure 1 is a schematic block diagram of an arrangement of data transmitter according to one preferred embodiment of the invention;

Figs. 2A and 2B, Figs. 3A through 3D and Fig. 4 are illustrations for explaining operations of the data transmitter shown in Fig. I; and

Fig. 5 is a schematic block diagram of a data receiver for receiving the transmission data encoded in the data transmitter shown in Fig. I.

Fig. I shows a block diagram of an encoding apparatus provided at a transmitter end according to one preferred embodiment of the invention.

The encoding apparatus includes a memory having a memory capacity corresponding to a period of video data to be skipped, and a circuit for identifying parameters from reference data derived from this memory.

In the encoding apparatus shown in Fig. I, a television signal digitized at a predetermined sampling frequency is supplied to an input terminal indicated by reference numeral I. Ten (I0) field memories II to 20 corresponding to the period of the video data to be skipped are cascade-connected to the input terminal I. In the preferred embodiment, the respective periods of the odd field and even field are selected to be nine (9) fields.

When the digital television signal constructed of sequential fields containing a first odd television field as a first television field as illustrated in Fig. 2A is supplied to the input terminal I, the respective field data signals from the first to tenth fields appear at the output of the field memories II to 20, as shown in Fig. 2B, in case that an eleventh field data signal is supplied to the input terminal I.

In Fig. 2A, a symbol "To" (equal to 9 fields) corresponds to a period of the video data to be skipped for the odd fields, whereas another symbol "Te" corresponds to one for the even fields. The data signal of the first fields in the periods of the video data to be skipped (e.g., the first field, sixth field, eleventh field and sixteenth field) are transmitted as it is without compression. Accordingly, the fields to be transmitted are those denoted by "$\ell$", $\ell$ + 5, $\ell$ + I0, and $\ell$ + 5m, where "$\ell$" indicates initial fields and "m" represents an integer. As shown in Fig. 2B, when the data signal of the eleventh field is supplied to the input terminal I, the data signal of the first field is output from the field memory II.

These field data signals to be transmitted are supplied to a reference pixel data generating circuit 2. The reference pixel data generating circuit 2 is a circuit for extracting neighbour 40 reference pixel data from the data signals of the field to be transmitted with respect to each of respective pixels of the k-th field to be skipped. The reference pixel data extracted by the reference pixel data generating circuit 2 is supplied to a transposed matrix accumulating circuit 3 and multiplying circuits 2I to 24, respectively.

When the field "$\ell$" to be transmitted is output from the field memory II, the data signals of the fields which are omitted during the transmission, i.e.,$\ell$ + 2nd, $\ell$ + 4th,$\ell$ + 6th and $\ell$ + 8th fields are supplied to the multiplying circuits 2I, 22, 23 and 24, respectively. An accumulating circuit including adding circuits 3I, 32, 33 and 34 is connected to the corresponding multiplying circuits 2I to 24. Multiplying circuits 4I, 42, 43, 44 are connected to the respective accumulating circuits 3I through 34. Another accumulating circuit consisting of an adding circuit 4 is connected to the transposed matrix accumulating circuit 3 and the inverse matrix generating circuit 5 is connected to the output of this accumulating circuit.

Outputs derived from the inverse matrix generating circuit 5 are supplied to the multiplying circuits 4I to 44. These arithmetic operating circuits to which the data signals of the fields not transmitted are supplied, function as a circuit for identifying parameters by using the reference pixel data. Parameters wI to w40 of the fields are output to respective output terminals 7, 8, 9 and I0. One field data signal transmitted within one period of the video data to be skipped is taken out from the output terminal 6. True data of one field and the parameters contained in four fields which are skipped are transmitted.

A prediction value with respect to the skipped image data of the field "k" (Fig. 3A) can be calculated as a linear combination of a total of 40 (fourty) pixel data consisting of: the neighbouring I5 pixel data "$I_\ell$" in the transmitted field "$\ell$" (see Fig. 3B); the neighbouring I0 pixel data in "I$\ell$ + 5" (see Fig. 3C); and the neighbouring I5 pixel data "I$\ell$ + I0" in the transmitted field "$\ell$ + I0" (see Fig. 3D).

It should be noted that the solid lines in the horizontal direction represent lines scanned in the odd-numbered fields, whereas the dashed lines in the horizontal direction indicate lines scanned in the even-numbered fields. If the pixels in question are present in the even-numbered field, different from the example shown in Fig. 3A,the relationship between the odd field and the even field from which the reference pixels are extracted, is inverted with respect to the relationship of Fig. 3A.

In Fig. 3A to 3D, it is assumed that a line "Y" indicates a position where the concerning pixel data of the field "k" is contained, a line "Y + I" is located just upper the line "Y", a line "Y + 2" is positioned above the line "Y + I", whereas the lines "Y - I" and "Y - 2" are successively located under the line "Y".

In Figs. 3A to 3D, the solid lines in the vertical direction indicate the sampling positions in the respective fields, the sampling position "X - I" corresponds to the sampling position preceding the sampling position "X" of the concerning pixel data in the field "k", and the sampling position "X - 2" corresponds to the previous sampling position, "X - I". Moreover, the sampling position "X + I" corresponds to the sampling position succeeding the above-defined sampling position "X", and also the sampling position "X + 2" corresponds to one following the sampling position "X + I".

The prediction data $\hat{I}(x,y)$ regarding the relevant pixel may be expressed by a linear combination between the reference pixels and the parameters in the following equation:

$$
\begin{aligned}
\hat{I}k(x,y) = {} & w1 \times I\ell(x-2,y+2) \\
& + w2 \times I\ell(x-1,y+2) + w3 \times I\ell(x,y+2) \\
& + w4 \times I\ell(x+1,y+2) + w5 \times I\ell(x+2,y+2) \\
& + w6 \times I\ell(x-2,y) + w7 \times I\ell(x-1,y) \\
& + w8 \times I\ell(x,y) + w9 \times I\ell(x+1,y) \\
& + wl0 \times I\ell(x-2, y) + w11 \times I\ell(x-2,y-2) \\
& + wl2 \times I\ell(x-1,y-2) + w13 \times I\ell(x,y-2) \\
& + wl4 \times I\ell(x+1,y-2) + w15 \times I\ell(x+2,y-2) \\
& + wl6 \times I_{\ell+5}(x-2,y+1) + w17 \times I_{\ell+5}(x-1,y+1) \\
& + wl8 \times I_{\ell+5}(x,y+1) + w19 \times I_{\ell+5}(x+1,y+1) \\
& + w20 \times I_{\ell+5}(x+2,y+1) + w21 \times I_{\ell+5}(x-2,y-1) \\
& + w22 \times I_{\ell+5}(x-1,y-1) + w23 \times I_{\ell+5}(x,y-1) \\
& + w24 \times I_{\ell+5}(x+1,y-1) + w25 \times I_{\ell+5}(x+2,y-1) \\
& + w26 \times I_{\ell+10}(x-2,y+2) + w27 \times I_{\ell+10}(x-1,y+2) \\
& + w28 \times I_{\ell+10}(x,y+2) + w29 \times I_{\ell+10}(x+1,y+2) \\
& + w30 \times I_{\ell+10}(x+2,y+2) + w31 \times I_{\ell+10}(x-2,y) \\
& + w32 \times I_{\ell+10}(x-1,y) + w33 \times I_{\ell+10}(x,y) \\
& + w34 \times I_{\ell+10}(x+1,y) + w35 \times I_{\ell+10}(x+2,y) \\
& + w36 \times I_{\ell+10}(x-2,y-2) + w37 \times I_{\ell+10}(x-1,y-2) \\
& + w38 \times I_{\ell+10}(x,y-2) + w39 \times I_{\ell+10}(x+1,y-2) \\
& + w40 \times I_{\ell+10}(x+2,y-2)
\end{aligned}
$$

The above-described prediction equation implies that the prediction value concerning the pixel of the k-th field is obtained in such a manner that the neighbouring pixels having the most significant correlation with respect thereto is derived as a representative value and then the representative value is corrected in the time spatial direction.

The parameter is identified by employing the reference pixel data by way of a method of least squares.

In other words, since a desired true value "Ik" of a certain pixel of the k-th field is equal to the value obtained by superimposing a prediction error "e" on the prediction value "$\hat{I}$" of the pixel corresponding thereto in accordance with the above-defined equation, the prediction error "e" is obtained by subtracting the prediction value "Ik" from the true value "Ik". The parameters wl to w40 are calculated that can make the square sum of such a prediction error minimum with respect to a predetermined number of the pixels (this will be discussed later). A description of identification of these parameters will be made later.

It should be understood that the highest precision of the image reproduction may be achieved if the parameters wl through w40 are calculated by employing all of the pixels contained in one field based upon the method of least squares (e.g., in case of 800 pixels in one field consisting of 255 lines, 800 × 255 pixels in total). The entire circuit's scale would, however, then be large. Accordingly, these parameters wl to w40 may be preferably identified, using a predetermined number of pixels, e.g., 300 pixels as representative pixels which have been skipped every a plurality of samples.

Alternatively, one field is subdivided into two-dimensional subregions for the block-processing, so that the parameters may be calculated for each block region.

As illustrated in Fig. 4, in the periphery of the screen where no data is present, the same data as those "a" to "h" within the screen may be employed for this peripheral portion around the screen. Moreover, as shown in Fig. 4 by the dotted line, the data identification may be alternatively performed in the region which is positioned within one line by two samples inside the peripheral portion of the screen.

A description will now be made of the identification for the parameters by utilizing the method of least squares.

The linear combination equation to calculate the above-described prediction data $\hat{I}k$ (x,y) can be expressed by the following determinant in the case of performing the prediction regarding the whole of one field.

$$\begin{bmatrix} \hat{I}k(x_1,y_1) \\ \hat{I}k(x_2,y_1) \\ \vdots \\ \hat{I}k(x_1,y_2) \\ \hat{I}k(x_2,y_2) \\ \vdots \\ \hat{I}k(x_m,y_n) \end{bmatrix} = \begin{bmatrix} I\ell(x_1-2,y_1+2) & \cdots & I\ell{+10}\ (x_1+2,y_1-2) \\ I\ell(x_2-2,y_1+2) & \cdots & I\ell{+10}\ (x_2+2,y_1-2) \\ \vdots & \vdots & \vdots \\ I\ell(x_1-2,y_2+2) & \cdots & I\ell{+10}\ (x_1+2,y_2-2) \\ I\ell(x_2-2,y_2+2) & \cdots & I\ell{+10}\ (x_2+2,y_2-2) \\ \vdots & \vdots & \vdots \\ I\ell(x_m-2,y_n+2) & \cdots & I\ell{+10}\ (x_m+2,y_n-2) \end{bmatrix}$$

$$\times \begin{bmatrix} w1 \\ w2 \\ \vdots \\ w40 \end{bmatrix}$$

If this determinant is simplified by use of a matrix and a vector, then

$$\hat{I} = I \cdot w$$

where, "$\hat{I}$" is a vector of the (m x n)-th order, "I" is a matrix of (m x n, 40), and "w" is a vector of the 40th order.

On the other hand, a vector "$\hat{I}$" consisting of arranged data (true values) in the k-th field is a vector of the (m x n)-th order. Assuming that "e" is a prediction error vector of the (m x n)-th order, the following equation is obtained;

$$I = \hat{I} + e = I \cdot w + e$$

Finally, it becomes:

$$e = \mathbb{I} - I \cdot \mathbf{w}$$

The parameters "w" can be derived which make the square sum of the prediction error vector "e" minimum. This equation is modified as follows.

$$\begin{aligned} e^T e &= (\mathbb{I} - I\mathbf{w})^T(\mathbb{I} - I\mathbf{w}) \\ &= \mathbb{I}^T\mathbb{I} - \mathbb{I}^T I\mathbf{w} - \mathbf{w}^T I \ \mathbb{I} + \mathbf{w}^T I^T I\mathbf{w} \end{aligned}$$

where, "T" is a transposed matrix.
In this equation, the parameters "w" which make $e^T$ e minimum can satisfy the following equation.

$$\frac{\partial(e^T e)}{\partial \mathbf{w}} = -I^T\mathbb{I} + I^T I\mathbf{w} = 0$$

As a result,

$$\therefore \ \mathbf{w} = (I^T I)^{-1} I^T \mathbb{I}$$

In case of all pixels (m × n) in one field, a very large matrix of (m × n, 40) is necessarily handled according to this equation, so that it is not practical solution. In this embodiment, therefore, the above equation is modified to a matrix and a vector of smaller orders than the above order and then is processed. Namely, the matrix of (40, 40) of ($P = I^T . I$) and the vector of the 40th-order of ($Q = I^T . I$) are practically used.

$$P = \sum_{i=1\sim m} \sum_{j=1\sim n} \begin{bmatrix} I\ell\ (x_{i-2}, y_{j+2}) \\ I\ell\ (x_{i-1}, y_{j+2}) \\ \cdot \\ \cdot \\ \cdot \\ I\ \ell+10\,(x_{i+2}, y_{j-2}) \end{bmatrix}$$

$$\times \left[ I\ell\ (x_{i-2}, y_{j+2})\ I\ell\ (x_{i-1}, y_{j+2}) \cdot\cdot\cdot I\ell+10\ (x_{i+2}, y_{j-2}) \right]$$

$$Q = \sum_{i=1\sim m} \sum_{j=1\sim n} \begin{bmatrix} I\ell\ (x_{i-2}, y_{j+2}) \\ I\ell\ (x_{i-1}, y_{j+2}) \\ \cdot \\ \cdot \\ \cdot \\ I\ell+10\ (x_{i+2}, y_{j-2}) \end{bmatrix} \times\ Ik\,(x_i, y_j)$$

Since ($P = I^T . I$) is the matrix employing only the reference pixels, it is a common term to identify the parameters for four fields to be skipped. In the preferred embodiment, a calculation on $I^T$. I) is performed by the transposed matrix multiplying circuit 3 and thereafter the multiplication is carried out with respect to the overall field in the adder circuit 4, so that the term of the equation P can be calculated. In addition, the common term of $I^T$ , $I)^{-1}$ can be obtained by the inverse matrix generating circuit 5.

In the respective multiplying circuits 2l, 22, 23 and 24, the reference pixels are multiplied by the pixels of the field to be skipped, so that the value of the vector Q for the respective fields can be derived from the outputs of the adder circuits 3l to 34 for accumulating the outputs of these multiplying circuits 2l to 24. As the above-described common term P is multiplied in the multiplying circuits 4l to 44 by the values of Q that have been obtained every field, the resultant parameter "w" is obtained from the output terminals 7 to l0 of the encoding apparatus shown in Fig. l.

It should be noted that it may be possible to perform compression-encoding of the data of the respective transmission fields so as to reduce the quantity of data.

A decoding apparatus for receiving the above-mentioned encoded transmission data, as illustrated in Fig. 5, includes: field memories 53 and 54 to which the field data received by an input terminal 5l is supplied; a parameter selecting circuit 55 for accepting parameters wl to w40 received via an input terminal 52; and prediction sections 56, 57, 58 and 59 to which the data of three fields ($\ell$), ($\ell$ + 5), ($\ell$ + l0) and the corresponding parameters derived from the parameter selecting circuit 55 are supplied.

Accordingly, the reproduced data of the fields which have been skipped during the data transmission, namely the desired digital television signal can be formed by these prediction sections 56 to 59. Then, both the digital television signal of the fields received via the input terminal 5l and the data of the fields reproduced in the prediction sections 56 to 59 are fed to a buffer memory 60. The sequence of the television signal supplied into this buffer memory 60 is rearranged to establish the correct television signal sequence. The resultant television signal is derived from an output terminal 6l.

In accordance with the present invention, the quantity of the data transmission can be advantageously compressed by skipping the data of the fields at a predetermined period. Since the prediction parameters regarding the non-transmitted data of the fields are also transmitted, the image reproduction of the non-transmitted data can be effectively done at the receiving end. That is to say, the function of these parameters is to predict the pixels in question, based upon the neighbouring reference pixels having the higher correlation with the above pixels. As a result, even if movement information of a plurality of moving objects is not transmitted, deterioration in the reproduced image due to the objects' movement can to a considerable degree prevented.

Further, no problem concerning a block strain can take place because compensation can be effected three-dimensionally from the viewpoint of both time and space.

Comparison results of errors contained in the reproduced image with respect to the conventional and inventive data-skipping systems are represented in the table I below. It should be noted that the conventional data-skipping system employs a l/2 data-skipping method. The conventional system A is the system for substituting the data by the preceding frame, and the conventional system B is the system for interpolating the data by the averaged values of the preceding and succeeding frames. The present invention employs, for instance, a 1/5 data-skipping method the same as in the previous embodiment.

TABLE 1

| Errors | Conventional system A | Conventional system B | Present Invention |
|---|---|---|---|
| 30 - | 443 | 48 | 6 |
| 20 - 29 | 865 | 280 | 131 |
| 15 - 19 | 1,014 | 477 | 279 |
| 10 - 14 | 2,202 | 1,180 | 809 |
| 9 | 623 | 455 | 324 |
| 8 | 1,041 | 553 | 443 |
| 7 | 1,119 | 698 | 597 |
| 6 | 1,630 | 944 | 864 |
| 5 | 1,690 | 1,359 | 1,337 |
| 4 | 3,153 | 1,964 | 2,190 |
| 3 | 4,212 | 3,467 | 4,329 |
| 2 | 10,520 | 9,516 | 12,449 |
| 1 | 28,667 | 33,302 | 35,742 |
| 0 | 28,897 | 32,112 | 26,855 |
| $\sigma^2$ | 25.4 | 9.4 | 6.6 |

It is apparent from the error variance $\sigma^2$ in the table I that the error contained in the reproduced image can be considerably reduced, although the present invention employs the l/5 data-skipping method, as compared with the conventional data-skipping type compressed data transmission system.

## Claims

**1.** An apparatus for interframe coding of video signals employing frame skipping, the apparatus comprising:

input means (1) for receiving video data of sequential fields;

memory means (11-20) for storing the video data of a plurality of fields;

first transmitting means (16) for periodically transmitting video data every predetermined number of fields; characterised by:

means (2) for extracting reference pixel data in the region of a given pixel position from said fields to be transmitted;

parameter generating means (3,4,5,21-24,31-34,41-44) for deriving coefficients of a linear combination which specifies a time spatial relation between a prediction value in a field to be skipped and the values of said reference pixel data in said fields to be transmitted, said parameter generating means comprising an arithmetic operation circuit which minimises the sum of the squares of the prediction errors between said prediction values and the actual value of the respective pixels;

second transmitting means (7,8,9,10) for transmitting said parameters instead of the video data of said fields to be skipped.

2. An apparatus for transmitting video signals according to claim 1, wherein said plurality of fields to be periodically transmitted include odd and even fields.

3. An apparatus for transmitting video signals according to claim 2, wherein the video data of said odd fields are transmitted together with said respective parameters defining respective odd fields to be skipped and the video data of said even fields are transmitted together with said respective parameters defining respective even fields to be skipped.

4. An apparatus for transmitting video signals according to claim 1, 2 or 3, wherein the video data of at least ten fields are stored in said memory means.

5. An apparatus for transmitting video signals according to any one of the preceding claims wherein the video data of said plurality of fields are periodically transmitted every five fields.

6. An apparatus for transmitting video signals according to any one of the preceding claims, wherein said parameter generating means further comprises a first multiplying means for multiplying a matrix of neighbouring reference pixel data and transposed matrix thereof, first accumulating means for accumulating the result from said means for multiplying over whole field, means for generating inverse matrix of the result from said first accumulating means, second multiplying means for multiplying respective pixel data of fields to be transmitted and to be skipped, second accumulating means for accumulating the result from said second multiplying means, third multiplying means for multiplying the result from said means for generating inverse matrix and second multiplying means.

7. A method of interframe coding of video signals employing frame skipping comprising the steps of:

receiving video data of sequential fields;

storing the video data of a plurality of fields;

periodically transmitting video data every predetermined number of fields; characterised by the steps of:

extracting reference pixel data in the region of a given pixel position from a predetermined number of fields which are to be transmitted;

deriving coefficients of a linear combination which specify a time spatial relation between a prediction value in a field to be skipped and the values of said reference pixel data in said fields to be transmitted by minimising the sum of the squares of the prediction errors between said prediction values and the actual value of the respective pixels; and

transmitting said coefficients instead of the video data of said fields to be skipped.

8. A method of transmitting video signals according to claim 7, wherein said step of periodically transmitting includes the step of transmitting periodically said plurality of fields including odd and even fields.

9. A method of transmitting video signals according to claim 8, wherein said steps of transmitting includes the step of transmitting the video data of said odd field together with said respective parameters defining the respective odd field to be skipped and the video data of said even field together with said respective parameters defining respective parameters defining respective even field to be skipped.

10. A method of transmitting video signals according to claim 7, 8 or 9, wherein said step of storing includes storing the video data of at least ten fields.

11. A method of transmitting video signals according to any one of claims 7 to 10, wherein said step of periodically transmitting includes the step of transmitting periodically the video data of said plurality of fields every five fields.

12. An apparatus for decoding an encoded video signal characterised by comprising:

input means (51,52) for receiving video data of fields periodically transmitted every predetermined number of fields and coefficients of a linear combination, which specifies a time spatial relation between a prediction value in a skipped field and reference pixel data of the transmitted fields and in which the sum of the squares of the prediction errors between said prediction values and the actual value of the respective pixels has been minimised, between said fields being periodically transmitted;

memory means (53,54) for storing the received video data of said fields being periodically transmitted;

prediction means (56-59) for predicting pixel data of said skipped fields from the received video data of said fields being periodically transmitted and said coefficients.

## Revendications

1. Un dispositif pour le codage inter-image de signaux vidéo employant le saut d'image, ce dispositif comprenant :

des moyens d'entrée (11) destinés à recevoir des données vidéo de trames séquentielles;

des moyens de mémoire (11-20) destinés à enregistrer les données vidéo d'un ensemble de trames;

des premiers moyens d'émission (16) destinés à émettre périodiquement des données vidéo à des intervalles d'un nombre prédéterminé de trames;

caractérisé par :

des moyens (2) destinés à extraire des données de pixel de référence des trames à émettre, dans la région d'une position de pixel donnée;

des moyens de génération de paramètres (3, 4, 5, 21-24, 31-34, 41-44) destinés à déterminer des coefficients d'une combinaison linéaire qui spécifie une relation spatio-temporelle entre une valeur de prédiction dans une trame à sauter, et les valeurs des données de pixel de référence dans les trames à émettre, ces moyens de génération de paramètres comprenant un circuit d'opérations arithmétiques qui minimise la somme des carrés des erreurs de prédiction entre les valeurs de prédiction et la valeur réelle des pixels respectifs; et

des seconds moyens d'émission (7, 8, 9, 10) destinés à émettre les paramètres précités au lieu des données vidéo des trames à sauter.

2. Un dispositif prévu pour l'émission de signaux vidéo selon la revendication 1, dans lequel l'ensemble de trames à émettre périodiquement comprend des trames impaires et des trames paires.

3. Un dispositif prévu pour l'émission de signaux vidéo selon la revendication 2, dans lequel les données vidéo des trames impaires sont émises conjointement aux paramètres respectifs qui définissent des trames impaires respectives à sauter, et les données vidéo des trames paires sont émises conjointement aux paramètres respectifs qui définissent des trames paires respectives à sauter.

4. Un dispositif prévu pour l'émission de signaux vidéo selon les revendication 1, 2 ou 3, dans lequel les données vidéo d'au moins dix trames sont enregistrées dans les moyens de mémoire.

5. Un dispositif prévu pour l'émission de signaux vidéo selon l'une quelconque des revendications précédentes, dans lequel les données vidéo de l'ensemble de trames sont émises périodiquement toutes les cinq trames.

6. Un appareil prévu pour l'émission de signaux vidéo selon l'une quelconque des revendications précédentes, dans lequel les moyens de génération de paramètres comprennent en outre des premiers moyens de multiplication qui sont destinés à multiplier une matrice de données de pixel de référence voisines et une matrice transposée de la matrice précitée, des premiers moyens d'accumulation qui sont destinés à accumuler le résultat provenant des moyens de multiplication, sur une trame complète, des moyens qui sont destinés à générer une matrice inverse du résultat provenant des premiers moyens d'accumulation, des seconds moyens de multiplication qui sont destinés à multiplier des données de pixel respectives de trames à émettre et à sauter, des seconds moyens d'accumulation qui sont destinés à accumuler le résultat provenant des seconds moyens de multiplication, et des troisièmes moyens de multiplication qui sont destinés à multiplier le résultat provenant des moyens précités de génération de matrice inverse, et celui provenant des seconds moyens de multiplication.

7. Un procédé de codage inter-image de signaux vidéo employant une technique de saut d'image, comprenant les étapes suivantes :

on reçoit des données vidéo de trames séquentielles;

on enregistre les données vidéo d'un ensemble de trames;

on émet périodiquement des données vidéo, à des intervalles d'un nombre de trames prédéterminé;

caractérisé par les étapes suivantes :

on extrait des données de pixel de référence d'un nombre prédéterminé de trames qui doivent être émises, dans la région d'une position de pixel donnée;

on détermine des coefficients d'une combinaison linéaire qui spécifient une relation spatiotemporelle entre une valeur de prédiction dans une trame à sauter et les valeurs des données de pixel de référence dans les trames à émettre, en minimisant la somme des carrés des erreurs de prédiction entre les valeurs de prédiction précitées et la valeur réelle des pixels respectifs; et

on émet les coefficients précités au lieu des données vidéo des trames à sauter.

**8.** Un procédé d'émission de signaux vidéo selon la revendication 7, dans lequel l'étape d'émission périodique comprend l'étape qui consiste à émettre périodiquement l'ensemble de trames, comprenant des trames impaires et paires.

**9.** Un procédé d'émission de signaux vidéo selon la revendication 8, dans lequel les étapes d'émission comprennent l'étape qui consiste à émettre les données vidéo de la trame impaire, en compagnie des paramètres respectifs définissant la trame impaire respective à sauter, et les données vidéo de la trame paire en compagnie des paramètres respectifs définissant la trame paire respective à sauter.

**10.** Un procédé d'émission de signaux vidéo selon la revendication 7, 8 ou 9, dans lequel l'étape d'enregistrement comprend l'enregistrement des données vidéo d'au moins dix trames.

**11.** Un procédé d'émission de signaux vidéo selon l'une quelconque des revendications 7 à 10, dans lequel l'étape d'émission comprend l'étape qui consiste à émettre périodiquement les données vidéo de l'ensemble de trames une fois toutes les cinq trames.

**12.** Un dispositif prévu pour le décodage d'un signal vidéo codé, caractérisé en ce qu'il comprend :

des moyens d'entrée (51, 52) qui sont destinés à recevoir des données vidéo de trames émises périodiquement à des intervalles d'un nombre prédéterminé de trames, et des coefficients d'une combinaison linéaire, spécifiant une relation spatio-temporelle entre une valeur de prédiction dans une trame sautée, et des données de pixel de référence des trames émises, entre les trames qui sont émises périodiquement, et dans lesquels la somme des carrés des erreurs de prédiction entre les valeurs de prédiction et la valeur réelle des pixels respectifs a été minimisée;

des moyens de mémoire (53, 54) destinés à enregistrer les données vidéo reçus des trames qui sont émises périodiquement; et

des moyens de prédiction (56-59) qui sont destinés à prédire des données de pixel des trames sautées, à partir des données vidéo reçues des trames qui sont émises périodiquement, et des coefficients précités.

## Patentansprüche

**1.** Gerät zur Zwischenbildkodierung von Videosignalen unter durch Überspringen von Bildern,

mit Eingangsmitteln (1) zur Aufnahme von Videodaten aufeinanderfolgender Halbbilder,

mit Speichermitteln (11-20) zur Speicherung der Videodaten einer Mehrzahl von Halbbildern,

und mit ersten Übertragungsmitteln (16) zum periodischen Übertragen von Videodaten eines jeweils nach einer vorbestimmten Anzahl von Halbbildern auftretenden Halbbildes,

gekennzeichnet durch

eine Einrichtung (2) zum Extrahieren von Referenzpixeldaten im Bereich einer gegebenen Pixelposition aus den zu übertragenden Halbbildern,

eine Parameter-Generatoreinrichtung (3, 4, 5, 21-24, 31-34, 41-44) zum Ableiten von Koeffizienten einer linearen Kombination, die eine Zeit-Raum-Beziehung zwischen einem Prädiktionswert in einem zu überspringenden Halbbild und den Werten der Referenzpixeldaten in den zu übertragenden Halbbildern spezifiert, wobei diese Parameter-Generatoreinrichtung eine arithmetische Operationsschaltung enthält, die die Summe der Quadrate der Prädiktionsfehler zwischen den genannten Prädiktionswerten und dem tatsächlichen Wert der betreffenden Pixel minimiert, und

zweiten Übertragungsmitteln (7, 8, 9, 10) zum Übertragen der genannten Parameter anstelle der Videodaten der zu überspringenden Halbbilder.

2. Gerät zum Übertragen von Videodaten nach Anspruch 1, bei dem die Mehrzahl von periodisch zu übertragenden Halbbildern ungeradzahlige und geradzahlige Halbbilder enthält.

3. Gerät zum Übertragen von Videodaten nach Anspruch 2, bei dem die Videodaten der ungeradzahligen Halbbilder zusammen mit den jeweiligen Parametern übertragen werden, die jeweils zu überspringende ungeradzahlige Halbbilder definieren, und bei dem die Videodaten der genannten geraozahligen Halbbilder zusammen mit den jeweiligen Parametern übertragen werden, die jeweils zu überspringende geradzahlige Halbbilder definieren.

4. Gerät zum Übertragen von Videodaten nach Anspruch 1, 2 oder 3, bei dem in den Speichermitteln die Videodaten von wenigstens zehn Halbbildern gespeichert werden.

5. Gerät zum Übertragen von Videodaten nach einem der vorhergehenden Ansprüche, bei dem die Videodaten der Mehrzahl von Halbbildern periodisch bei jedem fünften Halbbild übertragen werden.

6. Gerät zum Übertragen von Videodaten nach einem der vorhergehenden Ansprüche, bei dem die Parameter-Generatoreinrichtung ferner aufweist:
eine erste Multipliziereinrichtung zum Multiplizieren einer Matrix von benachbarten Referenzpixeldaten und deren transformierter Matrix,
eine erste Akkumuliereinrichtung zum Akkumulieren des von dieser Multipliziereinrichtung gelieferten Ergebnisses über das ganze Halbbild,
Mittel zur Erzeugung der inversen Matrix des von der ersten Akkumuliereinrichtung gelieferten Ergebnisses,
eine zweite Multipliziereinrichtung zum Multiplizieren korrespondierender Pixeldaten von zu übertragenden und zu überspringenden Halbbildern,
eine zweite Akkumuliereinrichtung zum Akkumulieren des von der zweiten Multipliziereinrichtung gelieferten Ergebnisses,
eine dritte Multipliziereinrichtung zum Multiplizieren des von der zweiten Multipliziereinrichtung gelieferten Ergebnisses
sowie eine dritte Multipliziereinrichtung zum Multiplizieren der von den Mitteln zur Erzeugung der inversen Matrix und der zweiten Multipliziereinrichtung gelieferten Ergebnisse.

7. Verfahren zur Zwischenbildkodierung von Videosignalen unter Einsatz von Bildüberspringen, mit den Verfahrensschritten:
Aufnehmen von Videodaten aufeinanderfolgender Halbbilder,
Speichern der Videodaten einer Mehrzahl von Halbbildern,
periodisches Übertragen von Videodaten eines nach jeweils einer vorbestimmten Anzahl von Halbbildern auftretenden Halbbildes,
gekennzeichnet durch die Verfahrensschritte:
Ableiten von Koeffizienten einer linearen Kombination, die eine Zeit-Raum-Beziehung zwischen einem Prädiktionswert in einem zu überspringenden Halbbild und den Werten der Referenzpixeldaten in den zu übertragenden Halbbildern spezifiert, durch Minimieren der Summe der Quadrate der Prädiktionsfehler zwischen den genannten Prädiktionswerten und dem tatsächlichen Wert der betreffenden Pixel, und
Übertragen dieser Koeffizienten anstelle der Videodaten der zu überspringenden Halbbilder.

8. Verfahren zum Übertragen von Videosignalen nach Anspruch 7, bei dem der Verfahrensschritt des periodischen Übertragens den Verfahrensschritt des periodischen Übertragens der Mehrzahl von Halbbildern, einschließlich ungeradzahliger und geradzahliger Halbbilder umfaßt.

9. Verfahren zum Übertragen von Videosignalen nach Anspruch 8, bei dem die Verfahrensschritte des Übertragens den Verfahrensschritt umfassen, daß die Videodaten des ungeradzahligen Halbbildes zusammen mit den betreffenden Parametern übertragen werden, die das jeweils zu überspringende ungeradzahlige Halbbild definieren, und die Videodaten des geradzahligen Halbbildes zusammen mit den betreffenden Parametern übertragen werden, die das jeweils zu überspringende geradzahlige Halbbild definieren.

10. Verfahren zum Übertragen von Videosignalen nach Anspruch 7, 8 oder 9, bei dem der Verfahrensschritt des Speicherns das Speichern der Videodaten von wenigstens zehn Halbbildern umfaßt.

**11.** Verfahren zum Übertragen von Videosignalen nach einem der vorhergehenden Ansprüche 7 bis 10, bei dem der Verfahrensschritt des periodischen Übertragens den Verfahrensschritt umfaßt, daß die Videodaten der genannten Mehrzahl von Halbbildern periodisch bei jedem fünften Halbbild übertragen werden.

**12.** Gerät zum Dekodieren eines kodierten Videosignals, gekennzeichnet durch:

Eingangsmittel (1) zur Aufnahme von Videodaten von Halbbildern, die periodisch jeweils nach einer vorbestimmten Anzahl von Halbbildern auftreten, sowie, zwischen den periodisch übertragenen Halbbildern, von Koeffizienten einer linearen Kombination, die eine Zeit-Raum-Beziehung zwischen einem Prädiktionswert in einem übersprungenen Halbbild und Referenzpixeldaten der übertragenen Halbbildern spezifiert, und in der die Summe der Quadrate der Prädiktionsfehler zwischen den genannten Prädiktionswerten und dem tatsächlichen Wert des betreffenden Pixels minimiert ist,

Speichermittel (53, 54) zum Speichern der empfangenen Videodaten der periodisch übertragenen Halbbilder und

eine Prädiktionseinrichtung (56-59) zur Prädiktion von Pixeldaten der übersprungenen Halbbilder aus den empfangenen Videodaten der periodisch übertragenen Halbbilder und den genannten Koeffizienten.

FIG. 1

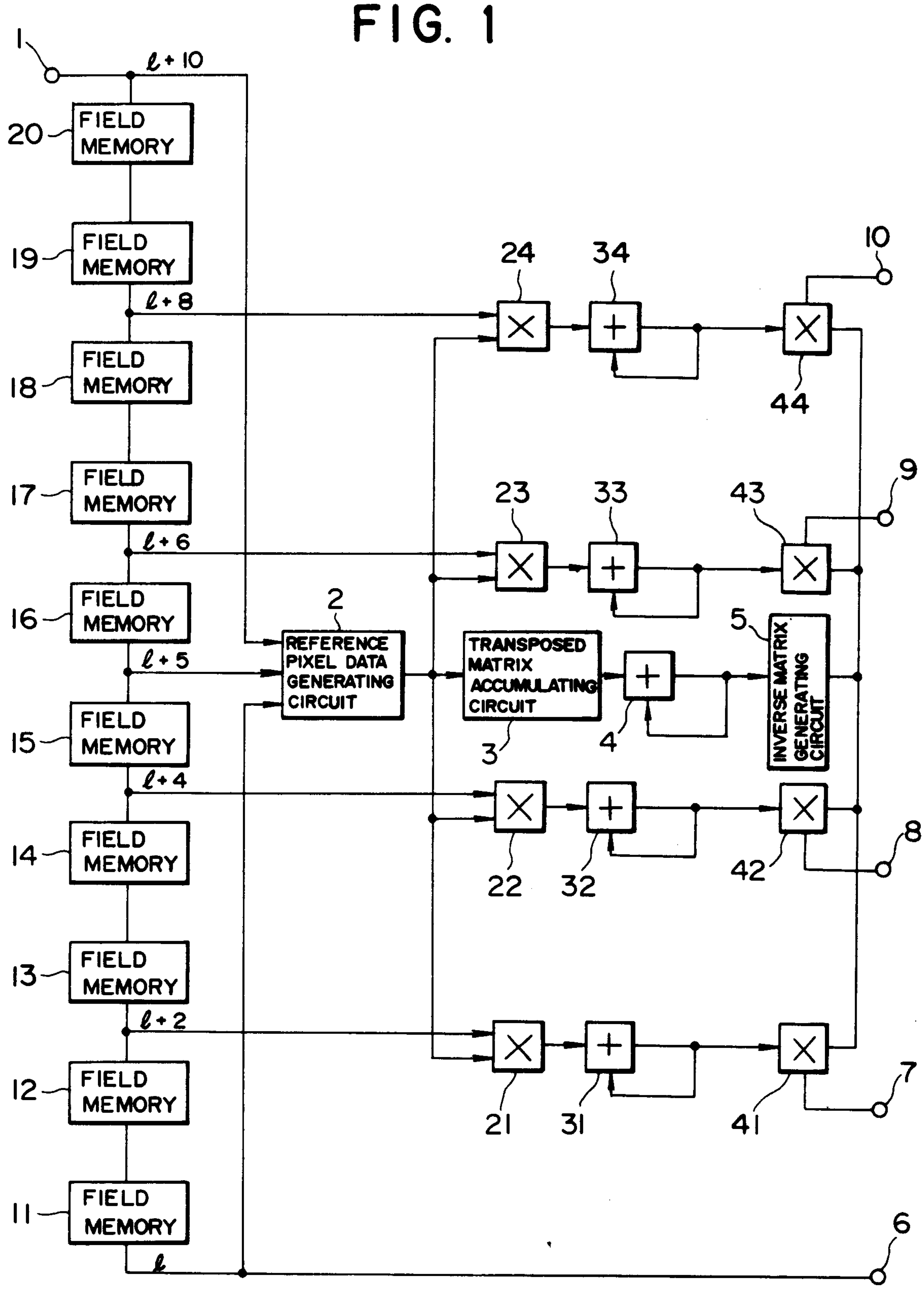

1
ℓ+10
20
FIELD MEMORY
19
FIELD MEMORY
ℓ+8
18
FIELD MEMORY
17
FIELD MEMORY
ℓ+6
16
FIELD MEMORY
ℓ+5
15
FIELD MEMORY
ℓ+4
14
FIELD MEMORY
13
FIELD MEMORY
ℓ+2
12
FIELD MEMORY
11
FIELD MEMORY
ℓ
2
REFERENCE PIXEL DATA GENERATING CIRCUIT
TRANSPOSED MATRIX ACCUMULATING CIRCUIT
3
4
5
INVERSE MATRIX GENERATING CIRCUIT
24
34
10
44
23
33
43
9
22
32
42
8
21
31
41
7
6

FIG. 2A

FIG. 2B

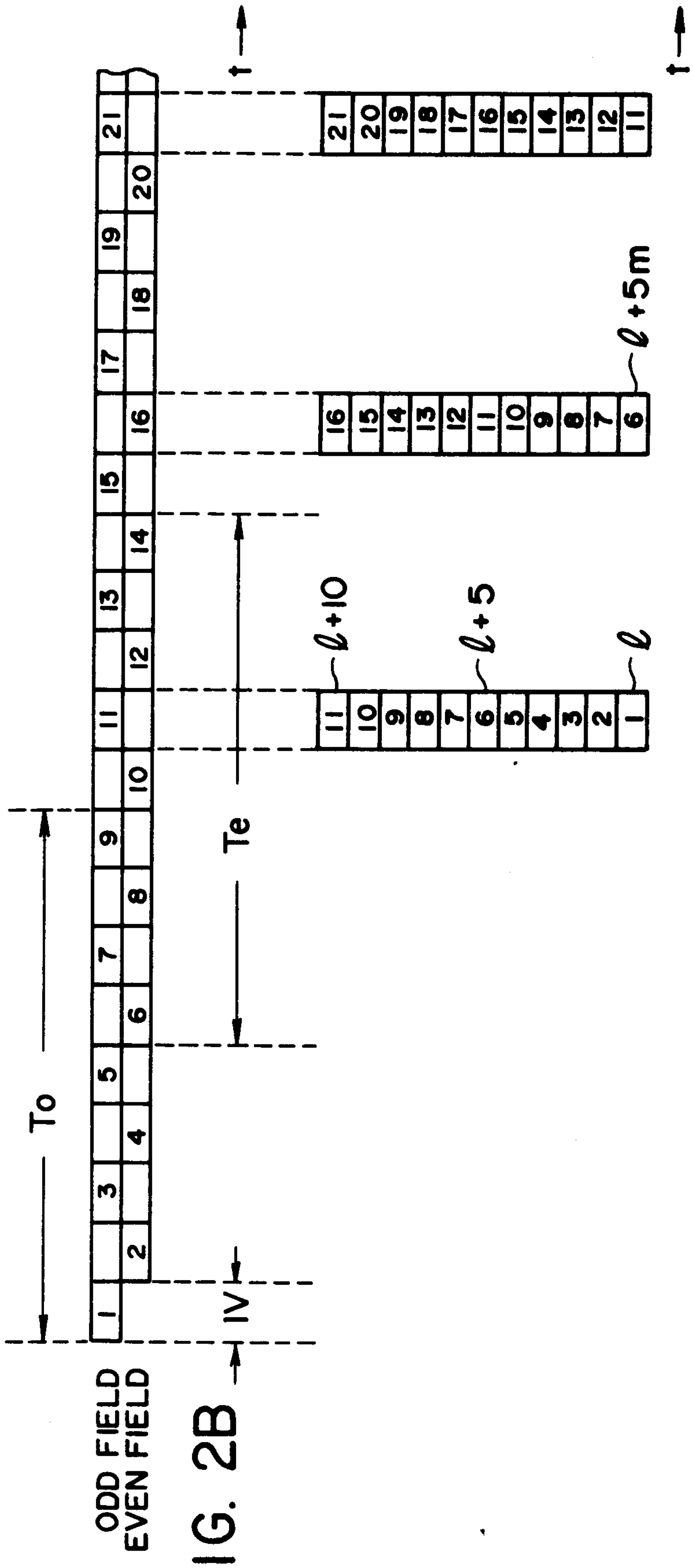

FIG. 3A

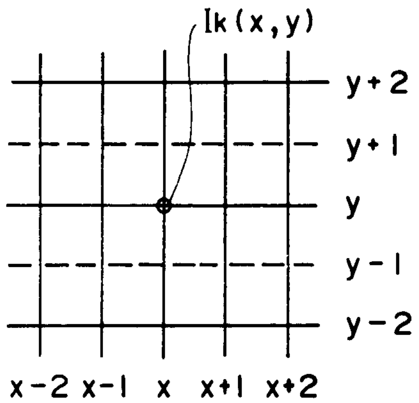


FIG. 3B

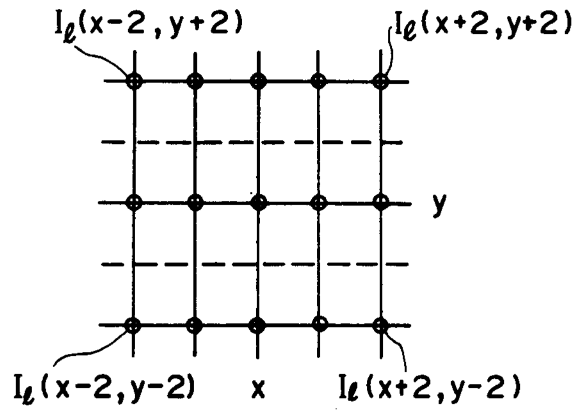


FIG. 3C

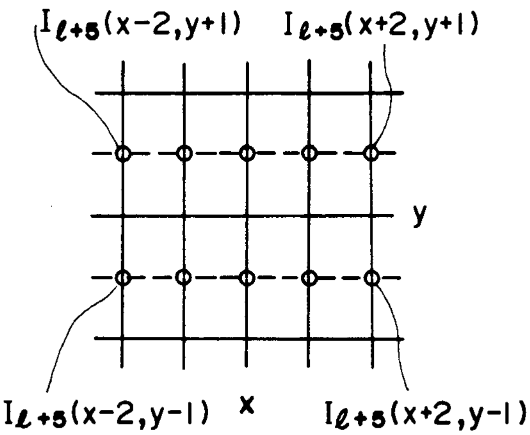


FIG. 3D

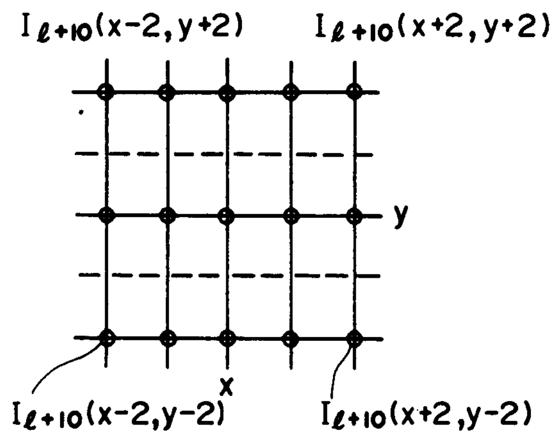


FIG. 4

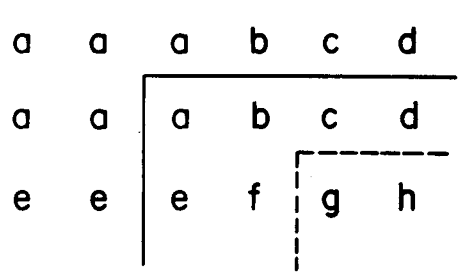

FIG. 5

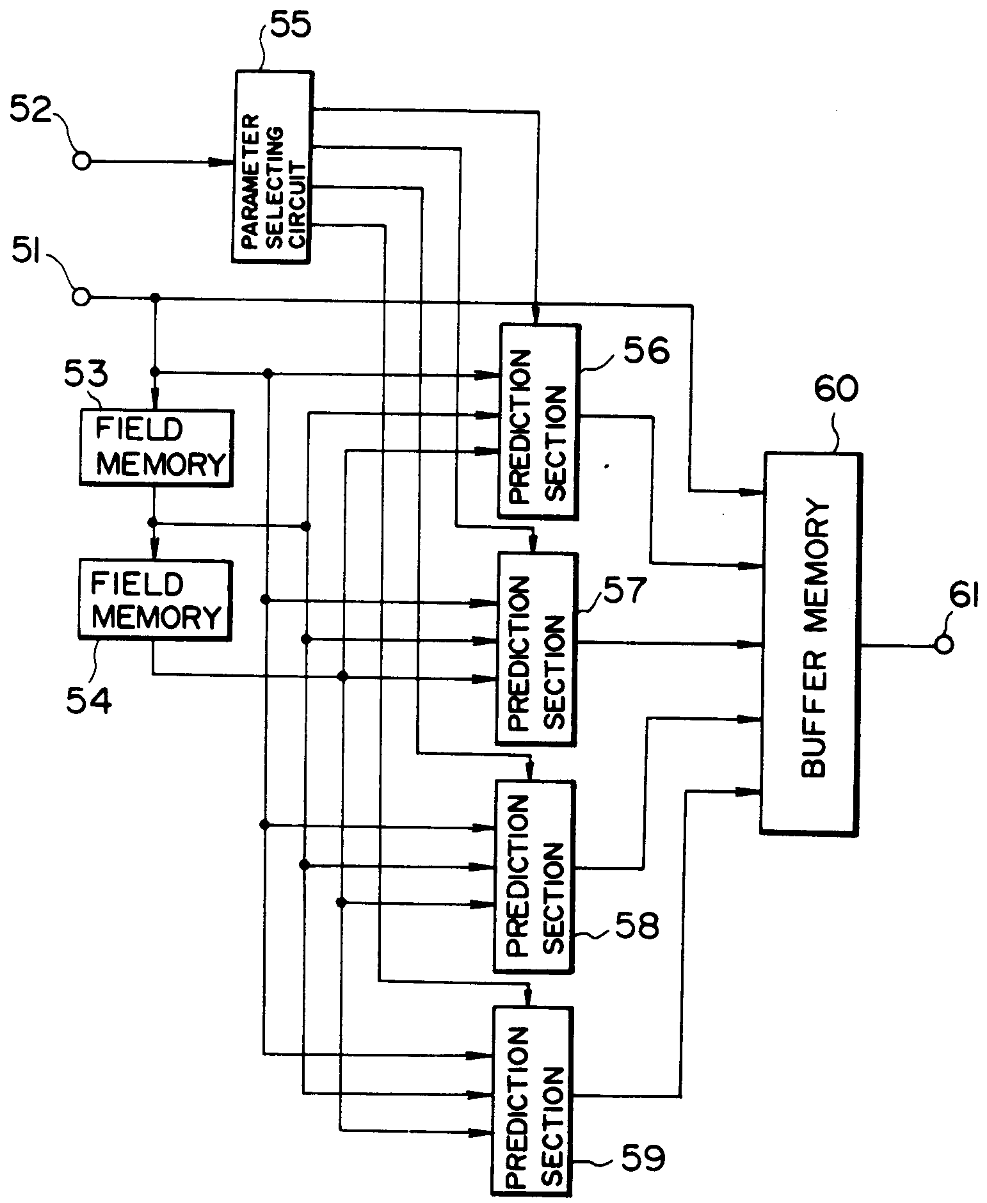

55
52
PARAMETER SELECTING CIRCUIT
51
53
FIELD MEMORY
FIELD MEMORY
54
PREDICTION SECTION
56
PREDICTION SECTION
57
PREDICTION SECTION
58
PREDICTION SECTION
59
60
BUFFER MEMORY
61